# EUROPEAN PATENT APPLICATION

(11) **EP 4 194 723 A1**
(43) Date of publication of application: **14.06.2023**
(21) Application number: 21213777.2
(22) Date of filing: 10.12.2021
(51) Int. Cl.: F16K 1/22, B08B 9/00, F16K 1/226, F16K 27/02

(54) **A BUTTERFLY VALVE DISC FOR A BUTTERFLY VALVE**

(71) Applicant: Alfa Laval Corporate AB, 221 00 Lund (SE)
(72) Inventor: ANDERSEN, Jens Folkmar, DK-7000 FREDERICIA (DK); JENSEN, Otto, DK-6200 AABRERAA (DK)
(74) Representative: Alfa Laval Attorneys

(57) **Abstract**

The disclosure relates to a butterfly valve disc (1) for a butterfly valve (2), said butterfly valve disc (1) comprising: a circular disc plate (4) comprising at least one groove (6) arranged in the periphery of the disc plate (4), which groove (6) extends in the circumferential direction of the disc plate (4); a first disc pin (8) connected to the periphery of the disc plate (4), which first disc pin (8) comprises a leakage channel (10) fluidly connected to the groove (6) in the disc plate (4); a second disc pin (12) connected to the disc plate (4) on the diametrically opposite side of the connection of the first disc pin (8); wherein the valve disc further comprises a first sealing section (14) with a first sealing surface (16), which is circumferentially arranged, at least partly around the first disc pin (8); and wherein the first sealing section (14) comprises at least one notch (18), which is configured to be fluidly connected with the leakage channel (10) in the first disc pin (8) for flushing and cleaning the leakage channel (10). The disclosure further relates to a butterfly valve (2) and a method for flushing and cleaning a leakage channel (10) of a butterfly valve (2).

## Description

### Technical field

The present invention relates to a butterfly valve disc for a butterfly valve. The invention also relates to a butterfly valve comprising such a butterfly valve disc. The invention also relates to a method for flushing and cleaning a leakage channel of a butterfly valve.

### Background

Butterfly valves are used for opening and closing pipes and channels for allowing or restricting the flow of fluid in the pipes and channels. The fluid may be a liquid or a gas. The butterfly valve comprises a butterfly valve disc, which is rotatably or pivotably arranged in a through opening in a valve housing. The valve disc comprises a circular disc plate, which is connected to a valve pin. The valve pin is rotatably arranged in the valve housing. An actuator may be connected to the valve pin for pivoting the valve disc and thus controlling the opening and closing of the valve. A sealing ring may be arranged in the valve housing, which is configured to provide a fluid tight sealing between the valve disc and the valve housing in the closed position of the valve disc.

However, the sealing between the valve disc and the valve housing may not always be totally fluid tight, which depends on temperature fluctuations in the valve. At low temperatures the compression may be reduced between the valve disc and the sealing ring, which may lead to that the fluid pass the sealing area between the valve disc and the sealing ring in the closed position of the valve.

Known butterfly valves have therefore been provided with double valve discs, which are arranged at a distance from each other in the valve housing. Between the valve discs a leakage chamber is created, from which an indication of leakage is achieved if fluid is present in the chamber. There are also known butterfly valves, which are provided with a valve disc comprising a peripheral groove extending in the circumferential direction of the disc plate. The groove introduces a double sealing surface between the valve disc and the sealing ring with the possibility of leak detection. The groove is connected to leakage channels in the disc pin, through any fluid leakage to the groove is evacuated in the closed position of the valve. The leakage channels are cleaned by an additional cleaning process to prevent clogging and blocking of the channels. In the cleaning process the leakage channels are flushed by an external cleaning fluid in the closed position of the valve.

Document WO2010063374 A1 discloses an example of a butterfly valve with a disc comprising an annular leakage groove and leakage channels in the disc pin, which can be flushed and cleaned in the closed valve position using an external rinsing and cleaning fluid.

### Summary

A problem with the solutions of the prior art butterfly valves is that the leakage channels may only be flushed and cleaned in the closed position of the valves. In an installation where the valve should be open most of the time, and there is no possibility to clean the leakage channels in the opened position, the leakage channels may be clogged and blocked due to lack of frequent cleaning. As a result, any leakage of fluid may not be detected. Further, due to sanitary effects, frequently cleaning of the leakage channels is essential, especially when the butterfly valve is installed in a system for handling fluids with high hygienic demands.

There is thus a need for an improved butterfly valve comprising leakage detection characteristics and which may be frequently flushed and cleaned during operation.

It is an objective of the present disclosure to mitigate, alleviate or eliminate one or more of the above-identified deficiencies and disadvantages in the prior art and solve at least the above mentioned problem.

This objective is achieved with the above-mentioned butterfly valve disc for a butterfly valve, a butterfly valve and a method for flushing and cleaning a leakage channel of a butterfly valve according to the appended claims.

According to an aspect there is provided a butterfly valve disc for a butterfly valve. The butterfly valve disc comprises a circular disc plate comprising at least one groove arranged in the periphery of the disc plate, which groove extends in the circumferential direction of the disc plate. The valve disc further comprises a first disc pin connected to the periphery of the disc plate, which first disc pin comprises a leakage channel fluidly connected to the groove in the disc plate. The valve disc further comprises a second disc pin connected to the disc plate on the diametrically opposite side of the connection of the first disc pin. The valve disc further comprises a first sealing section with a first sealing surface, which is circumferentially arranged, at least partly around the first disc pin. The first sealing section comprises at least one notch, which is configured to be fluidly connected with the leakage channel in the first disc pin for flushing and cleaning the leakage channel.

An advantage of such butterfly valve disc is that the leakage channel is accessible for cleaning when the valve is opened. The fluid flowing through the valve may thus be used for flushing and cleaning of the leakage channel. Alternatively, if a cleaning in place operation is performed of the system, in which the valve is arranged, the leakage channel may be flushed and cleaned by a cleaning fluid used during the cleaning in place operation. Thus, no addition of an external flushing and cleaning arrangement need to be connected to the leakage channel of the valve. Frequent and regular flushing and cleaning of the leakage channel will prevent clogging and blocking of the leakage channel. As a result, any leakage of fluid will be detected. Further, due to the possibility of frequent flushing and cleaning of the leakage channel in the open position of the valve, the butterfly valve is allowed to be installed in systems for handling fluids with high hygienic demands.

The at least one groove arranged in the periphery of the disc plate, may extend along a part of the periphery of the disc plate or along the total periphery of the disc plate. The first disc pin is connected to the periphery of the disc plate. The at least one groove may be configured to pass through the first disc pin. The leakage channel in the first disc pin is fluidly connected to the groove in the disc plate. In case several grooves are arranged in the periphery of the disc plate, they are fluidly connected to the leakage channel in the first disc pin. The first and the second valve pins may have external surfaces configured to be mounted in a valve housing. The length of second disc pin may be long enough for extending out of a butterfly valve housing. The second disc pin may be connected to an actuator for pivoting the valve disc and thus controlling the opening and closing of the valve. Alternatively, second disc pin may end within the butterfly valve housing, and the actuator may extend in to the butterfly valve housing and be connected to the valve disc. The first sealing surface of the first sealing section may together with a corresponding sealing surface of a valve housing be configured to prevent fluid to pass between the surfaces. The first sealing surface of the first sealing section is configured to slide on the corresponding sealing surface of a valve housing during a pivotal movement of the butterfly valve disc. The at least one notch is arranged in the first sealing section so that fluid may pass through the notch and into the leakage channel. This fluid connection between the notch and the leakage channel makes it possible to flush and clean the leakage channel. By pivoting the butterfly valve disc to a cleaning position, the fluid connection between the notch and the leakage channel is established and the leakage channel may be flushed and cleaned. The pivoting of the butterfly valve disc provides for a selectable fluid connection between the notch and the leakage channel depending on the pivoted position of the butterfly valve disc. The leakage channel may be flushed and cleaned by the fluid flowing through the valve and a system in which the valve is arranged, or be flushed and cleaned by a cleaning fluid used during a cleaning in place operation at which the process fluid has been replaced by the cleaning fluid.

According to an aspect, the at least one notch is an indentation, which extends into the first sealing section and the first sealing surface. The indentation is defined by its geometry. The geometry of the indentation is selected so that the indentation extends in to the first sealing surface. The first sealing surface is thus provided with the indentation. Since the indentation also extends into the first sealing section, selected surfaces of the first sealing section other than the first sealing surface may be provided with the indentation. Therefore, the indentation may extend into the first sealing surface and further to another surface of the first sealing section. Such a configuration may fluidly connect the space within a through opening of the valve housing, in which the butterfly valve disc is arranged, and the leakage channel in the disc pin. Thus, this fluid connection between space within a through opening of the valve housing and the leakage channel makes it possible to flush and clean the leakage channel. By pivoting the butterfly valve disc to a cleaning position, the fluid connection between the space within a through opening of the valve housing and the leakage channel is established and the leakage channel may be flushed and cleaned.

According to an aspect, the at least one notch is a bore, which extends through the first sealing section and opens in the first sealing surface. The bore may extend linearly or curved. The bore may extend from a surface of the sealing section, through the sealing section and further to the first sealing surface. The surface of the sealing section is thus provided with a bore opening and the first sealing surface is provided with a bore opening and the bore extend between the two openings. Such a configuration may fluidly connect the space within a through opening of the valve housing, in which the butterfly valve disc is arranged, and the leakage channel in the disc pin. Thus, this fluid connection between space within a through opening of the valve housing and the leakage channel makes it possible to flush and clean the leakage channel. By pivoting the butterfly valve disc to a cleaning position, the fluid connection between the space within a through opening of the valve housing and the leakage channel is established through the bore and the leakage channel may be flushed and cleaned.

According to an aspect, the at least one notch is arranged in the first sealing section at a position with an angular offset in relation to a normal to the circular disc plate, preferably the angular offset is 10° - 40°, more preferred the angular offset is 20° - 30°, even more preferred the angular offset is about 25°. Such position of the notch in the first sealing section makes it possible to flush and clean the leakage channel in an open position of the valve disc. From the position, where the valve disc is pivoted in to a full opened position, the valve disc is pivoted further, corresponding to the angular offset position of the at least one notch, for flushing and cleaning of the leakage channel. When the valve disc has been pivoted to this angular position, which is beyond the full opened position of the valve disc, fluid is allowed to flow through the notch and further to the leakage channel, which fluid flow generates a flushing and cleaning of the leakage channel. The full opened position of the valve disc correspond to a position of the valve disc in which the normal to the circular disc plate has a direction of about 90° in relation to the flow direction of the fluid passing the disc plate. From the full opened position of the valve disc, the valve disc may be pivoted further corresponding to the angular offset, which preferably is 10° - 40°, more preferred is 20° - 30°, and even more preferred is about 25° for flushing and cleaning of the leakage channel. Thus, when the butterfly valve is opened, the valve disc may be pivoted to the position corresponding to the angular offset position of the at least one notch, for flushing and cleaning of the leakage channel.

According to an aspect, the leakage channel has a first portion extending in the axial direction of the first disc pin and a second portion extending in a direction inclined to the first portion, and wherein the first portion opens into an end surface of the first disc pin, and the second portion opens into a peripheral surface of the first disc pin. Fluid for flushing and cleaning the leakage channel, will flow into the second portion of the leakage channel and further through the first portion and finally out of the opening of the end surface of the first disc pin. This fluid connection between the first and second portion of the leakage channel makes it possible to flush and clean the leakage channel. The leakage channel may be flushed and cleaned by the fluid flowing through the valve and a system in which the valve is arranged, or be flushed and cleaned by a cleaning fluid used during a cleaning in place operation at which the process fluid has been replaced by the cleaning fluid. The inclination of the second portion in relation to the first portion may be about 90°. The second portion may have an inclination in relation to the first portion which is different from 90°. The first portion may extend in a direction which is parallel to a central axis of the first disc pin.

According to an aspect, the second portion opens into a peripheral surface of the first disc pin at an angular position corresponding to an angular position at which the at least one notch is arranged in the first sealing section. By pivoting the butterfly valve disc to a cleaning position, the fluid connection between the notch and the second portion of the leakage channel is established and the first and second portions of the leakage channel may be flushed and cleaned. Fluid for flushing and cleaning the leakage channel, will flow from the at least one notch and into the opening of the second portion of the leakage channel and further to the first portion and finally out of the opening of the end surface of the first disc pin. Thus, the first and second portions of the leakage channel are together flushed and cleaned by the fluid.

Further, the leakage channel may have a third portion extending in a direction inclined to the first portion, wherein the third portion opens into a peripheral surface of the first disc pin. Fluid that may leak into the at least one groove, which is arranged in the periphery of the disc plate, will in the closed position of the valve disc flow into the opening of the third portion of the leakage channel and further through the third portion and the first portion and finally out of the opening of the end surface of the first disc pin. The third portion of the leakage channel may extend in the same plane as the at least one groove in the circular disc plate. Any fluid, which flows out of the opening of the end surface of the first disc pin in the closed position of the disc valve indicates that there is a leakage of fluid into the at least one groove. In the cleaning position of the valve disc also the third portion of the leakage channel will be flushed and cleaned by the fluid.

According to an aspect, the circular disc plate comprises two grooves arranged in the periphery of the disc plate; one of the grooves extends from one side of the first disc pin to one side of the second disc pin, and the other groove extends from the other side of the first disc pin to the other side of the second disc pin. Such configuration of the two grooves will simplify the manufacturing of the valve disc. Such configuration of the two grooves will increase the strength of the valve disc, since the connection between the second disc pin and the disc plate will not be interfered by the groove. The two grooves will be connected to the leakage channel in the closed position of the butterfly valve.

According to an aspect, two notches are arranged in the first sealing section at diametrically opposite sides of the first sealing section. Two notches will increase the flushing and the volume flow of fluid in the leakage channel and thus also the cleaning effect when flushing and cleaning the leakage channel. The diametrically opposite arrangement of the notches in the first sealing section will simplify the manufacturing of the valve disc and also ensure that fluid will enter the leakage channel through the notches when flushing and cleaning the leakage channel.

According to an aspect, the valve disc further comprises a second sealing section with a second sealing surface, which is circumferentially arranged, at least partly around the second disc pin. The second sealing surface, which is circumferentially arranged second sealing section will ensure the tightness of the butterfly valve and thus prevent any leakage of fluid from the butterfly valve.

According to an aspect, the first sealing surface is flat with a normal parallel to a center axis of the first disc pin. The flat first sealing surface will and the orientation of the flat surface in relation to the first disc pin will increase the possibility to control the fluidly connection of the at least one notch with the leakage channel for flushing and cleaning the leakage channel.

According to an aspect there is provided a butterfly valve, comprising a butterfly valve disc, wherein the butterfly valve further comprises a sealing ring, which is provided with a first bore configured to receive the first disc pin of the butterfly valve disc, and a second bore configured to receive the second disc pin of the butterfly valve disc. The first and second bore of the sealing ring are configured to receive the disc pins of the valve disc so that the valve disc is rotatable or pivotable in relation to the sealing ring. The pivotable arrangement of the valve disc in relation to the sealing ring provides for an opening and closing of butterfly valve. In the closed position of the butterfly valve, the periphery of the disc is configured to lie against an inner peripheral surface of the sealing ring for provide a fluid tight connection. The first sealing surface of the first sealing section may together with a corresponding sealing surface of the sealing ring be configured to prevent fluid to pass between the surfaces. The first sealing surface of the first sealing section is configured to slide on the corresponding sealing surface of the sealing ring during a pivotal movement of the butterfly valve disc. The sealing ring may be made of a material with elastic properties, which facilitates the mounting of the valve disc in the sealing ring. The sealing ring may be made of rubber or a polymer.

According to an aspect, the first bore comprises at least one recess configured to establish a fluid communication between the at least one notch in the first sealing section and the leakage channel in the first disc pin. The fluid for flushing and cleaning of the leakage channel will pass the notch in the first sealing section, further though the at least one recess in the first bore of the sealing ring and finally through the leakage channel in the first disc pin. The pivotally arrangement of the first disc pin in the first bore provides for an interconnection of the notch and the leakage channel of the valve disc with the at least one recess in the first bore at an angular position of the valve disc in relation to the sealing ring.

According to an aspect, the at least one recess is configured to establish a fluid communication between the groove arranged in the periphery of the disc plate and the leakage channel in the first disc pin. Due to temperature fluctuations in the valve and/or wear of the valve, the fluid in the butterfly valve may in the closed position of the butterfly valve leak and pass the outer sealing periphery of the disc plate and the inner peripheral sealing surface of the sealing ring and further into the groove. This fluid in the groove will flow though the at least one recess in the first bore of the sealing ring and finally through the leakage channel in the first disc pin. Fluid coming out of the leakage channel indicates that there is a leakage between the outer sealing periphery of the disc plate and the inner peripheral sealing surface of the sealing ring. The pivotally arrangement of the first disc pin in the first bore provides for an interconnection of the groove and the leakage channel of the valve disc with the at least one recess in the first bore at an angular position of the valve disc in relation to the sealing ring corresponding to a closed position of the valve disc.

According to an aspect there is provided a method for flushing and cleaning a leakage channel of a butterfly valve. The method comprises the step of: turning the valve disc to an angular position, which is beyond the angular position of the valve disc in a fully open valve for fluidly connecting the at least one notch with the leakage channel in the first disc pin. Turning the valve disc may be performed manually or by an actuator connected to the valve disc. An advantage of the method is that the leakage channel is accessible for cleaning when the valve is opened. The method may be applied frequently when opening the butterfly valve. The fluid flowing through the valve may thus be used for flushing and cleaning of the leakage channels. Frequent and regular flushing and cleaning of the leakage channels will prevent clogging and blocking of the leakage channels. As a result, any leakage of fluid will be detected. Further, due to the possibility of frequent flushing and cleaning of the leakage channels in the open position of the valve, the butterfly valve is allowed to be installed in systems for handling fluids with high hygienic demands.

According to an aspect, the step of turning the valve disc to an angular position, which is beyond the angular position of the valve disc in a fully open valve for fluidly connecting the at least one notch with the leakage channel in the first disc pin, comprises turning the valve disc an angle beyond the angular position of the valve disc in a fully open valve corresponding to an angular offset, in relation to a normal to the circular disc plate, of a position at which the at least one notch is arranged in the first sealing section. The notch is arranged at an angular position in the first sealing section. This angular position may be related to as an angular offset position from a normal to the circular disc plate. From the position, where the valve disc is pivoted in to a full opened position, the valve disc is pivoted further, corresponding to the angular offset position of the at least one notch, for flushing and cleaning of the leakage channel. When the valve disc has been pivoted to this angular position, which is beyond the full opened position of the valve disc, fluid is allowed to flow through the notch and further to the leakage channel, which fluid flow generates a flushing and cleaning of the leakage channel. The full opened position of the valve disc correspond to a position of the valve disc in which the normal to the circular disc plate has a direction of about 90° in relation to the flow direction of the fluid passing the disc plate. For full opening the butterfly valve, the circular disc plate is turned about 90° from the closed position. Turning the circular disc plate further, more than 90° from the closed position, which is beyond the full opened position of the valve disc, fluid is allowed to flow through the notch and further to the leakage channel.

According to an aspect, the angular offset is 10° - 40°, preferably 20° - 30°, and most preferably about 25°. Such position of the notch in the first sealing section makes it possible to flush and clean the leakage channel in an open position of the valve disc. From the full opened position of the valve disc, the valve disc may be pivoted further corresponding to the angular offset, which preferably is 10° - 40°, more preferred is 20° - 30°, and even more preferred is about 25° for flushing and cleaning of the leakage channel. Thus, when the butterfly valve is opened, the valve disc may be pivoted to the position corresponding to the angular offset position of the at least one notch, for flushing and cleaning of the leakage channel.

The present disclosure will become apparent from the detailed description given below. The detailed description discloses specific examples of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular examples only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Drawings

The above objects, as well as additional objects, features and advantages of the present disclosure, will be more fully appreciated by reference to the following illustrative and non-limiting detailed description of examples of the present disclosure, when taken in conjunction with the accompanying drawings.
Fig. 1a schematically illustrates a view in perspective of a butterfly valve disc according to an example,
Fig. 1b schematically illustrates a view of perspective of a sealing ring according to an example,
Fig. 2 schematically illustrates a side view of a butterfly valve disc according to an example,
Fig. 3a schematically illustrates a side view of a butterfly valve in a closed position according to an example,
Fig. 3b schematically illustrates a section view of the butterfly valve in the closed position according to an example,
Fig. 4a schematically illustrates a side view of a butterfly valve in an opened position according to an example,
Fig. 4b schematically illustrates a section view of the butterfly valve in the opened position according to an example,
Fig. 5a schematically illustrates a side view of a butterfly valve in a flushing and cleaning position according to an example,
Fig. 5b schematically illustrates a section view of the butterfly valve in the flushing and cleaning position according to an example,
Fig. 6a schematically illustrates a section view of a detail of a butterfly valve in the flushing and cleaning position according to an example,
Fig. 6b schematically illustrates a section view of a detail of a butterfly valve in the flushing and cleaning position according to an example, and
Fig. 7 shows a flow chart of a method for flushing and cleaning a leakage channel of a butterfly valve according to an example.

### Detailed description

The present disclosure will now be described with reference to the accompanying drawings, in which examples of the disclosure are shown. The disclosure may, however, be embodied in other forms and should not be construed as limited to the herein disclosed examples. The disclosed examples are provided to fully convey the scope of the disclosure to the skilled person.

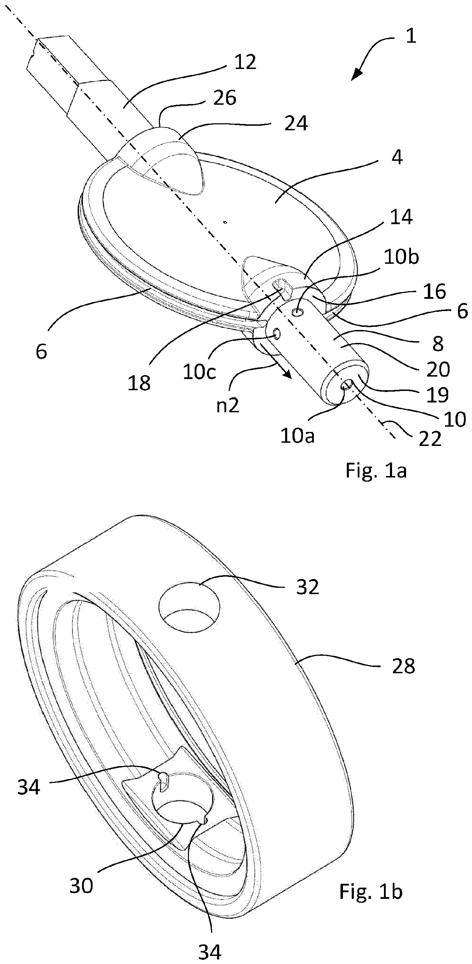

Fig. 1a schematically illustrates a view in perspective of a butterfly valve disc 1 according to an example. The butterfly valve disc 1 comprising a circular disc plate 4 comprising grooves 6 arranged in the periphery of the disc plate 4. The grooves 6 extend in the circumferential direction of the disc plate 4. The circular disc plate 4 comprises two grooves 6 arranged in the periphery of the disc plate 4. One of the grooves 6 extends from one side of the first disc pin 8 to one side of the second disc pin 12, and the other groove 6 extends from the other side of the first disc pin 8 to the other side of the second disc pin 12. A first disc pin 8 is connected to the periphery of the disc plate 4. The first disc pin 8 comprises a leakage channel 10, which is fluidly connected to the groove 6 in the disc plate 4. A second disc pin 12 is connected to the disc plate 4 on the diametrically opposite side of the connection of the first disc pin 8. The valve disc 1 further comprises a first sealing section 14 with a first sealing surface 16, which is circumferentially arranged, at least partly around the first disc pin 8. The first sealing surface 16 is flat with a normal n2 parallel to a center axis 22 of the first disc pin 8.

The first sealing section 14 comprises notches 18, which are configured to be fluidly connected with the leakage channel 10 in the first disc pin 8 for flushing and cleaning the leakage channel 10. The notches 18 may be indentations, which extend into the first sealing section 14 and the first sealing surface 16. The notches 18 may as an alternative be bores, which extend through the first sealing section 14 and open in the first sealing surface 16. The valve disc 1 further comprises a second sealing section 24 with a second sealing surface 26, which is circumferentially arranged around the second disc pin 12.

Fig. 1b schematically illustrates a view of perspective of a sealing ring 28 according to an example. The sealing ring 28, is provided with a first bore 30 receiving the first disc pin 8 of the butterfly valve disc 1, and a second bore 32 configured to receive the second disc pin 12 of the butterfly valve disc 1. The first bore 30 comprises recesses 34 configured to establish a fluid communication between the notches 18 in the first sealing section 14 of the valve disc 1 and the leakage channel 10 in the first disc pin 8. The recesses 34 are further configured to establish a fluid communication between the grooves 6 arranged in the periphery of the disc plate 4 and the leakage channel 10 in the first disc pin 8.

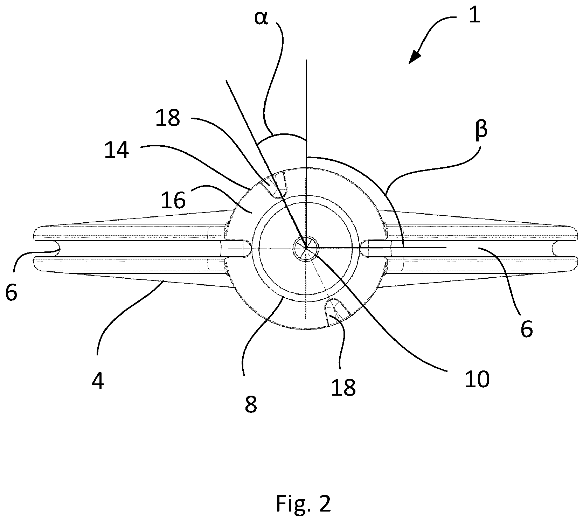

Fig. 2 schematically illustrates a side view of the butterfly valve disc 1 according to an example. Two notches 18 are arranged in the first sealing section 14 at diametrically opposite sides of the first sealing section 14. The notches 18 are arranged in the first sealing section 14 at a position with an angular offset α in relation to a normal n1 to the circular disc plate 4. Preferably, the angular offset α is 10° - 40°, more preferred the angular offset α is 20° - 30°, even more preferred the angular offset α is about 25°. The angel β represents the angel between the closed and opened position of the valve disc 1. The angel β is 90° in Fig. 2.

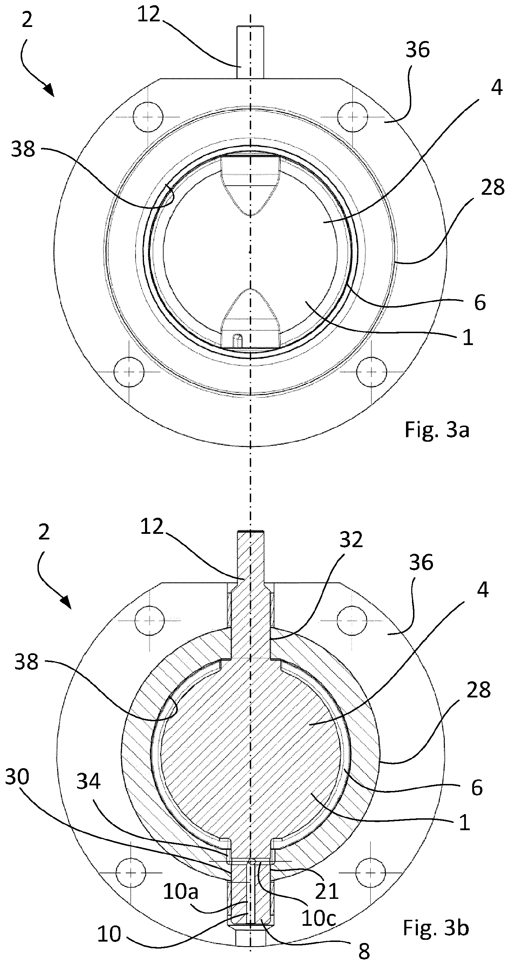

Fig. 3a schematically illustrates a side view of a butterfly valve 2 in a closed position according to an example and Fig. 3b schematically illustrates a section view of the butterfly valve 2 in the closed position according to an example. The butterfly valve 2 comprises the sealing ring 28, which is provided with the first bore 30 configured to receive the first disc pin 8 of the butterfly valve disc 1, and the second bore 32 configured to receive the second disc pin 12 of the butterfly valve disc 1. The first bore 30 comprises the recesses 34 configured to establish the fluid communication between the grooves 6 arranged in the periphery of the disc plate 4 and the leakage channel 10 in the first disc pin 8. The sealing ring 28 is arranged in a butterfly valve housing 36. The second disc pin 12 extends out of the housing 36. The valve disc 1 is rotatably or pivotably arranged in a through opening 38 defined by the sealing ring 28 in the valve housing 36.

The leakage channel 10 has a first portion 10a extending in the axial direction of the first disc pin 8 and a third portion 10c extending in a direction inclined to the first portion 10a, and wherein the first portion 10a opens into an end surface 19 of the first disc pin 8, and the third portion 10c opens into a peripheral surface 21 of the first disc pin 8. In the closed position of the butterfly valve 2 the fluidly connection between the grooves 6 and the leakage channel 10 is open.

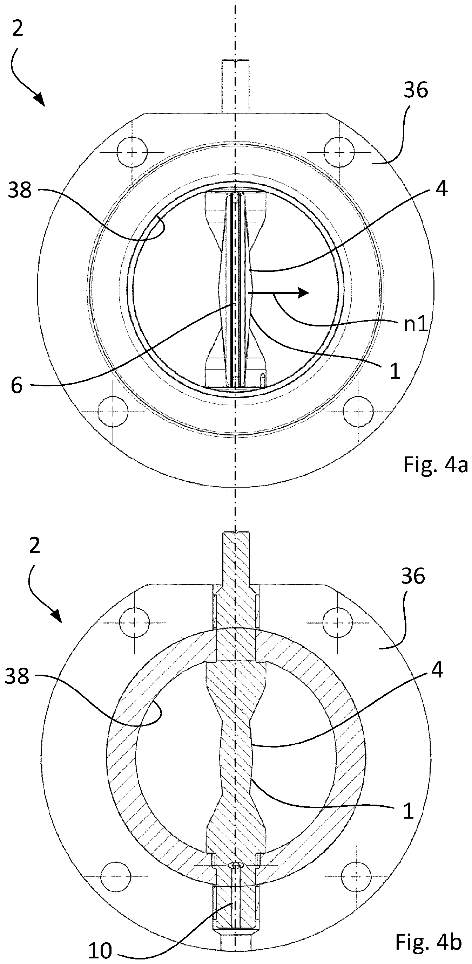

Fig. 4a schematically illustrates a side view of the butterfly valve 2 in an opened position according to an example and Fig. 4b schematically illustrates a section view of the butterfly valve 2 in the opened position according to an example. In the full open position of the butterfly valve 2, the circular disc plate 4 of the valve disc 1 has a position in which the normal n1 to the circular disc plate has a direction of about 90° in relation to the flow direction of the fluid passing the disc plate 4. The flow direction of the fluid in the butterfly valve 2 is in to and through the through opening 38 of the butterfly valve housing 36. In the full open position of the butterfly valve 2 the fluidly connection between the grooves 6 and the leakage channel 10 is closed.

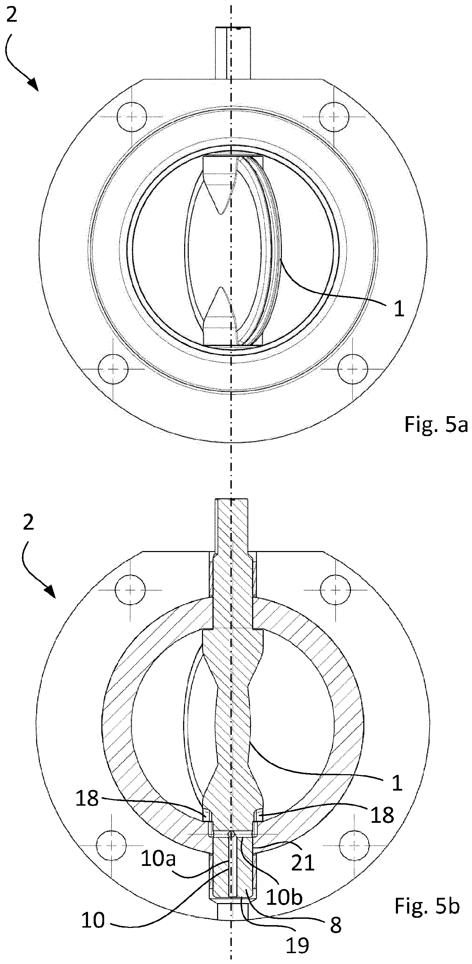

Fig. 5a schematically illustrates a side view of the butterfly valve 2 in a flushing and cleaning position according to an example and Fig. 5b schematically illustrates a section view of the butterfly valve 2 in the flushing and cleaning position according to an example. The valve disc 1 is turned or pivoted to an angular position, which is beyond the angular position of the valve disc 1 in the fully open valve 2. In this position the notches 18 are fluidly connected to the leakage channels 10 in the first disc pin 8. The leakage channel 10 has a second portion 10b extending in a direction inclined to the first portion 10a, wherein the second portion 10b opens into the peripheral surface 21 of the first disc pin 8. Fluid for flushing and cleaning the leakage channel 10 will flow from the notch 18 and into the opening of the second portion 10b of the leakage channel 10 and further through the second portion 10b and the first portion 10a and finally out of the opening of the first portion 10a in the end surface 19 of the first disc pin 8.

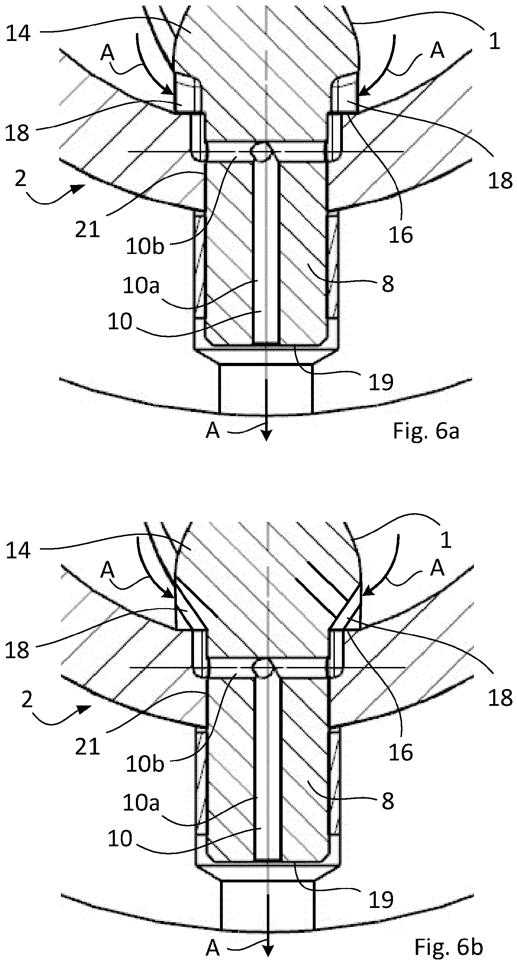

Fig. 6a schematically illustrates a section view of a detail of the butterfly valve 2 in the flushing and cleaning position according to an example. The notches 18 are indentations, which extend into the first sealing section 14 and the first sealing surface 16. The arrows A in fig. 6a illustrate how the fluid for flushing and cleaning the leakage channel 10 will flow into the indentations and into the opening of the second portion 10b of the leakage channel 10 and further through the second portion 10b and the first portion 10a and finally out of the opening of the first portion 10a in the end surface 19 of the first disc pin 8. The second portion 10b of the leakage channel 10 extends diametrically through the first disc pin 8 and opens in each end of the second portion 10b of the leakage channel 10 into the peripheral surface 21 of the first disc pin 8.

Fig. 6b schematically illustrates a section view of a detail of the butterfly valve 2 in the flushing and cleaning position according to an example. The notches 18 are bores, which extend through the first sealing section 14 and open in the first sealing surface 16. The arrows A in fig. 6b illustrate how the fluid for flushing and cleaning the leakage channel 10 will flow into the bores and into the opening of the second portion 10b of the leakage channel 10 and further through the second portion 10b and the first portion 10a and finally out of the opening of the first portion 10a in the end surface 19 of the first disc pin 8. The second portion 10b of the leakage channel 10 extends diametrically through the first disc pin 8 and opens in each end of the second portion 10b of the leakage channel 10 into the peripheral surface 21 of the first disc pin 8.

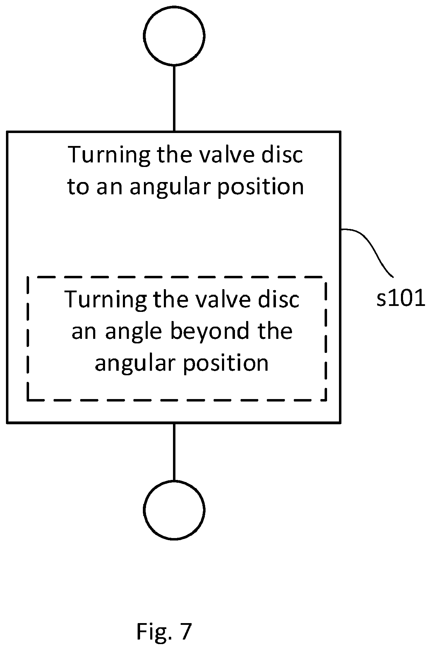

Fig. 7 shows a flow chart of a method for flushing and cleaning the leakage channel 10 of the butterfly valve 2 according to an example. The method relates to the butterfly valve 2, the butterfly valve disc 1 and the sealing ring 28, described in the figures 1a - 5b. The method comprises the step of turning s101 the valve disc 1 to an angular position, which is beyond the angular position of the valve disc 1 in a fully open valve 2 for fluidly connecting the at least one notch 18 with the leakage channel 10 in the first disc pin 8. This step may comprise turning the valve disc 1 an angle beyond the angular position of the valve disc 1 in a fully open valve corresponding to an angular offset α, in relation to a normal n1 to the circular disc plate 4, of a position at which the at least one notch 18 is arranged in the first sealing section 14. Preferably, the angular offset α is 10° - 40°, preferably 20° - 30°, and most preferably about 25°.

The foregoing description of examples has been furnished for illustrative and descriptive purposes. It is not intended to be exhaustive, or to limit the examples to the variations described. Many modifications and variations will obviously be apparent to one skilled in the art. The examples have been chosen and described in order to best explicate principles and practical applications, and to thereby enable one skilled in the arts to understand the invention in terms of its various examples and with the various modifications that are applicable to its intended use. The components and features specified above may, within the frame work of the disclosure, be combined between different examples specified.

## Claims

1. A butterfly valve disc (1) for a butterfly valve (2), said butterfly valve disc (1) comprising:
a circular disc plate (4) comprising at least one groove (6) arranged in the periphery of the disc plate (4), which groove (6) extends in the circumferential direction of the disc plate (4);
a first disc pin (8) connected to the periphery of the disc plate (4), which first disc pin (8) comprises a leakage channel (10) fluidly connected to the groove (6) in the disc plate (4);
a second disc pin (12) connected to the disc plate (4) on the diametrically opposite side of the connection of the first disc pin (8); wherein
the valve disc further comprises a first sealing section (14) with a first sealing surface (16), which is circumferentially arranged, at least partly around the first disc pin (8); and wherein the first sealing section (14) comprises at least one notch (18), which is configured to be fluidly connected with the leakage channel (10) in the first disc pin (8) for flushing and cleaning the leakage channel (10).

2. The valve disc (1) according to claim 1, wherein the at least one notch (18) is an indentation, which extends into the first sealing section (14) and the first sealing surface (16).

3. The valve disc (1) according to claim 1, wherein the at least one notch (18) is a bore, which extends through the first sealing section (14) and opens in the first sealing surface (16).

4. The valve disc (1) according to any one of the preceding claims, wherein the at least one notch (18) is arranged in the first sealing section (14) at a position with an angular offset (α) in relation to a normal (n1) to the circular disc plate (4), preferably the angular offset (α) is 10° - 40°, more preferred the angular offset (α) is 20° - 30°, even more preferred the angular offset (α) is about 25°.

5. The valve disc (1) according to any one of the preceding claims, wherein the leakage channel (10) has a first portion (10a) extending in the axial direction of the first disc pin (8) and a second portion (10b) extending in a direction inclined to the first portion (10a), and wherein the first portion (10a) opens into an end surface (19) of the first disc pin (8), and the second portion (10b) opens into a peripheral surface (20) of the first disc pin (8).

6. The valve disc (1) according to claim 5, wherein the second portion (10b) opens into a peripheral surface (20) of the first disc pin (8) at an angular position corresponding to an angular position at which the at least one notch (18) is arranged in the first sealing section (14).

7. The valve disc (1) according to any one of the preceding claims, wherein the circular disc plate (4) comprises two grooves (6) arranged in the periphery of the disc plate (4); one of the grooves (6) extends from one side of the first disc pin (8) to one side of the second disc pin (12), and the other groove (6) extends from the other side of the first disc pin (8) to the other side of the second disc pin (12).

8. The valve disc (1) according to any one of the preceding claims, wherein two notches (18) are arranged in the first sealing section (14) at diametrically opposite sides of the first sealing section (14).

9. The valve disc (1) according to any one of the preceding claims, wherein the valve disc (1) further comprises a second sealing section (24) with a second sealing surface (26), which is circumferentially arranged, at least partly around the second disc pin (12).

10. The valve disc (1) according to any one of the preceding claims, wherein the first sealing surface (16) is flat with a normal (n2) parallel to a center axis (22) of the first disc pin (8).

11. A butterfly valve (2), comprising a butterfly valve disc (1) according to any one of the preceding claims, wherein the butterfly valve (2) further comprises a sealing ring (28), which is provided with a first bore (30) receiving the first disc pin (8) of the butterfly valve disc (1), and a second bore (32) configured to receive the second disc pin (12) of the butterfly valve disc (1).

12. The butterfly valve (2) according to claim 11, wherein the first bore (30) comprises at least one recess (34) configured to establish a fluid communication between the at least one notch (18) in the first sealing section (14) and the leakage channel (10) in the first disc pin (8).

13. The butterfly valve (2) according to claim 11 or 12, wherein the at least one recess (34) is configured to establish a fluid communication between the groove (6) arranged in the periphery of the disc plate (4) and the leakage channel (10) in the first disc pin (8).

14. A method for flushing and cleaning a leakage channel (10) of a butterfly valve (2) according to any one of claims 11 - 13 ,
wherein the method comprises the step of:
turning (s101) the valve disc (1) to an angular position, which is beyond the angular position of the valve disc (1) in a fully open valve (2) for fluidly connecting the at least one notch (18) with the leakage channel (10) in the first disc pin (8).

15. The method according to claim 14, wherein the step of turning the valve disc (1) to an angular position, which is beyond the angular position of the valve disc (1) in a fully open valve (2) for fluidly connecting the at least one notch (18) with the leakage channel (10) in the first disc pin (8), comprises turning the valve disc (1) an angle beyond the angular position of the valve disc (1) in a fully open valve corresponding to an angular offset (α), in relation to a normal (n1) to the circular disc plate (4), of a position at which the at least one notch (18) is arranged in the first sealing section (14).

16. The method according to claim 15, wherein the angular offset (α) is 10° - 40°, preferably 20° - 30°, and most preferably about 25°.
